# EUROPEAN PATENT SPECIFICATION

(11) **EP 4 660 475 B1**
(45) Date of publication and mention of the grant of the patent: **02.12.2026**
(21) Application number: 24180091.1
(22) Date of filing: 05.06.2024
(51) Int. Cl.: F16D 48/06

(54) **A CLUTCH CONTROL SYSTEM AND METHOD FOR MITIGATING DRIVELINE SHOCK LOADS AND PREVENTING MECHANICAL FAILURE**
KUPPLUNGSSTEUERUNGSSYSTEM UND VERFAHREN ZUR VERRINGERUNG VON ANTRIEBSSTRANGSTOSSLASTEN UND ZUR VERHINDERUNG MECHANISCHER DEFEKTE
SYSTÈME ET PROCÉDÉ DE COMMANDE D'EMBRAYAGE POUR ATTÉNUER LES CHARGES DE CHOC DE CHAÎNE CINÉMATIQUE ET EMPÊCHER UNE DÉFAILLANCE MÉCANIQUE

(43) Date of publication of application: 10.12.2025
(60) Divisional application: 26202759.2 / 4 826 271
(73) Proprietor: VOLVO TRUCK CORPORATION, 405 08 Göteborg (SE)
(72) Inventor: SCHYLLBERG, Adam, 422 47 Hisings backa (SE); BJÄDE, Mattias, 574 94 Vetlanda (SE)
(74) Representative: Zacco Sweden AB

(56) References cited:
- US-A1- 2016 257 300
- US-B2- 10 036 435

## Description

### TECHNICAL FIELD

The disclosure of the present invention relates generally to a clutch control system. In particular aspects, the disclosure relates to a clutch control system and a method for mitigating driveline shock loads and preventing mechanical failure. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In scenarios where the driven wheels of a vehicle come to a sudden halt, such as when a vehicle collides with a loading bay, or during the transition from a wheel slipping event to a non-slipping event, a high shock load is transferred through the driveline of the vehicle, potentially leading to mechanical failure.

On heavy-duty vehicles, there is usually a large gear ratio between the propulsion system (e.g. engine) and the driven wheels. The engine and associated hardware can have a high inertia. The driveline gear ratio can be substantial, resulting in this high inertia rotating much faster than the wheels, thus accumulating much energy.

To avoid mechanical failures during slipping events or abrupt halts in a low ratio gear, the control strategy is to limit engine torque and/or be proactive with driver input if the brake pedal is pressed to avoid engine torque transferring through the driveline. However, these strategies have limited effectiveness in mitigating shock loads from suddenly stationary wheels.

Therefore, there is a need for an improved system and method that can effectively manage shock loads transmitted through the vehicle driveline, especially in heavy machinery, to prevent mechanical failures during sudden stops or transitions from slipping to non-slipping states.

US 10036435 B2 discloses a vehicle having a clutch which connects an engine with a driveline which includes a multi-ratio gearbox, the clutch having an actuator which can be operated by a vehicle driver to engage and disengage the clutch, the actuator also having a control system arranged to move the clutch between fully engaged and fully released positions through a range of positions allowing variable levels of clutch slip in order to automatically reduce torsional vibrations in the driveline.

US 2016/0257300 A1 discloses a vehicle control system for preventing malfunction of the clutch for selectively connecting the engine with the power train. The vehicle control system is applied to a vehicle having an engine, a motor disposed on a power train, and a clutch interposed therebetween. In order to prevent a malfunction of the clutch, the vehicle control system is configured to engage the clutch while causing a slip but without starting the engine if the engine has not yet been started.

### SUMMARY

According to a first aspect of the disclosure, a clutch control system for mitigating driveline stress in a vehicle, the clutch control system comprising a friction clutch, a control unit, and a clutch actuator is disclosed. The friction clutch is capable of transitioning between a fully open, a partially open, and a fully closed position. The control unit is configured to receive vehicle data, wherein the vehicle data comprises current engine torque, define one or more operational modes of the friction clutch, wherein the one or more operational modes comprise a driveline protection mode defined by having an operating range between the fully open position and an effectively closed position of the clutch, wherein the effectively closed position is a partially open position having a torque capacity that exceeds the current engine torque, thereby preventing clutch slip at the effectively closed position. The clutch actuator configured to operate the clutch in accordance with the one or more operational modes, including the driveline protection mode. The first aspect of the disclosure may seek to absorb driveline shock loads that occur due to abrupt wheels stops. A technical benefit may include that significant shock loads from abrupt wheel stops will exceed the torque capacity, causing the clutch to slip. This prevents the shock load from being absorbed by the more fragile parts of the driveline.

Optionally in some examples, including in at least one preferred example, the clutch control unit is configured to define the one or more operational modes, wherein the one or more operational modes further comprises a default mode defined by having an operating range between the fully open position and the fully closed position of the clutch. An advantage of operating the friction clutch in a default mode, in addition to the driveline protection mode, is that wear on the friction clutch may be reduced if it is not constantly operated in driveline protection mode, thereby increasing the lifespan of the friction clutch.

Optionally in some examples, including in at least one preferred example, the vehicle data comprises wheel slip data and the clutch actuator is configured to operate the clutch in accordance with the default mode and switch to the driveline protection mode upon detection of a wheel slip. A technical benefit may include that the driveline protection mode will be active when the driven wheels regain traction.

Optionally in some examples, including in at least one preferred example, the vehicle data comprises nearby obstacle data and the clutch actuator is configured to operate the clutch in accordance with the default mode and switch to the driveline protection mode upon detection of a nearby obstacle. A technical benefit may include that driveline protection mode will be active in the event of a sudden stop due to a collision with a detected obstacle.

Optionally in some examples, including in at least one preferred example, the vehicle data comprises information on current gear and the clutch actuator is configured to operate the clutch in accordance with the default mode and switch to the driveline protection mode in response to a gear shift to a gear that has been designated for driveline protection mode usage. A technical benefit may include that driveline protection mode will be active when using gears that are more prone to mechanical failure.

Optionally in some examples, including in at least one preferred example, having a torque capacity that exceeds current engine torque is achieved by having a torque capacity that exceeds a predefined torque limit. The predefined torque limit may depend on a current gear of the vehicle. A technical benefit may include that the torque capacity of the friction clutch does not need to be lowered to levels that are not associated with mechanical failure.

Optionally in some examples, the predefined torque limit is 0 to 20 percent above the current engine torque. A technical benefit may include that fragile components of the driveline are less prone to mechanical failure within this interval.

According to a second aspect of the disclosure, a vehicle comprising the aforementioned clutch control system and one or more vehicle sensors is disclosed. The vehicle sensors are configured to provide vehicle data. The vehicle sensors may comprise a crankshaft sensor and/or an engine speed sensor. The vehicle sensors may also comprise a wheel slip sensor configured to provide wheel slip data and/or a parking sensor configured to provide nearby obstacle data. The vehicle data comprises current engine torque, or any parameter indicative of current engine torque. The second aspect of the disclosure may seek to absorb driveline shock loads that occur due to abrupt wheels stops. A technical benefit may include that significant shock loads from abrupt wheel stops will exceed the torque capacity, causing the clutch to slip. This prevents the shock load from being absorbed by the more fragile parts of the driveline.

According to a third aspect of the disclosure, a method for mitigating driveline stress in a vehicle is disclosed. The vehicle comprises a friction clutch capable of transitioning between a fully open, a partially open, and a fully closed position, and the method comprises receiving vehicle data, defining one or more operational modes, and operating the friction clutch. Receiving vehicle data involves receiving vehicle data comprising current engine torque and/or a parameter indicative of current engine torque. Defining one or more operational modes of the friction clutch comprises defining a driveline protection mode defined by having an operating range between a fully open position and an effectively closed position of the friction clutch, wherein the effectively closed position is a partially open position having a torque capacity that exceeds current engine torque, thereby preventing clutch slip at the effectively closed position. Operating comprises operating the friction clutch in accordance with the one or more operational modes, including the driveline protection mode. The third aspect of the disclosure may seek to absorb driveline shock loads that occur due to abrupt wheels stops. A technical benefit may include that significant shock loads from abrupt wheel stops will exceed the torque capacity, causing the clutch to slip. This prevents the shock load from being absorbed by the more fragile parts of the driveline.

Optionally in some examples, including in at least one preferred example, defining one or more operational modes comprises defining a default mode having an operating range between the fully open position and the fully closed position of the clutch. An advantage of operating the friction clutch in a default mode, in addition to the driveline protection mode, is that wear on the friction clutch may be reduced if it is not constantly operated in driveline protection mode, thereby increasing the lifespan of the friction clutch.

Optionally in some examples, including in at least one preferred example, the vehicle data comprises wheel slip data, and operating comprises operating the friction clutch in accordance with the default mode and switching to operating the friction clutch in accordance with the driveline protection mode upon detection of a wheel slip. A technical benefit may include that the driveline protection mode will be active when the driven wheels regain traction.

Optionally in some examples, including in at least one preferred example, the vehicle sensor comprises nearby obstacle data and operating comprises operating the friction clutch in accordance with the default mode and switching to operating the friction clutch in accordance with the driveline protection mode upon detection of a nearby obstacle. A technical benefit may include that driveline protection mode will be active in the event of a sudden stop due to a collision with a detected obstacle.

Optionally in some examples, including in at least one preferred example, the vehicle data comprises information on current gear and operating comprises operating the friction clutch in accordance with the default mode and switching to operating the friction clutch in accordance with the driveline protection mode in response to a gear shift to a gear that has been designated for driveline protection mode usage. A technical benefit may include that driveline protection mode will be active when using gears that are more prone to mechanical failure.

Optionally in some examples, including in at least one preferred example, having a torque capacity that exceeds current engine torque is achieved by having a torque capacity that exceeds a predefined torque limit. The predefined torque limit may depend on a current gear of the vehicle. A technical benefit may include that the torque capacity of the friction clutch does not need to be lowered to levels that are not associated with mechanical failure.

Optionally in some examples, the predefined torque limit is 0 to 20 percent above the current engine torque. A technical benefit may include that fragile components of the driveline are less prone to mechanical failure within this interval.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram of a vehicle comprising a clutch control system for mitigating driveline stress according to an example.
FIG. 2A is a schematic diagram of a friction clutch in fully open position.
FIG. 2B is a schematic diagram of a friction clutch in an effectively closed position.
FIG. 2C is a schematic diagram of a friction clutch in a fully closed position.
FIG. 3 is a flow chart of a method for mitigating driveline shock loads in a vehicle.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

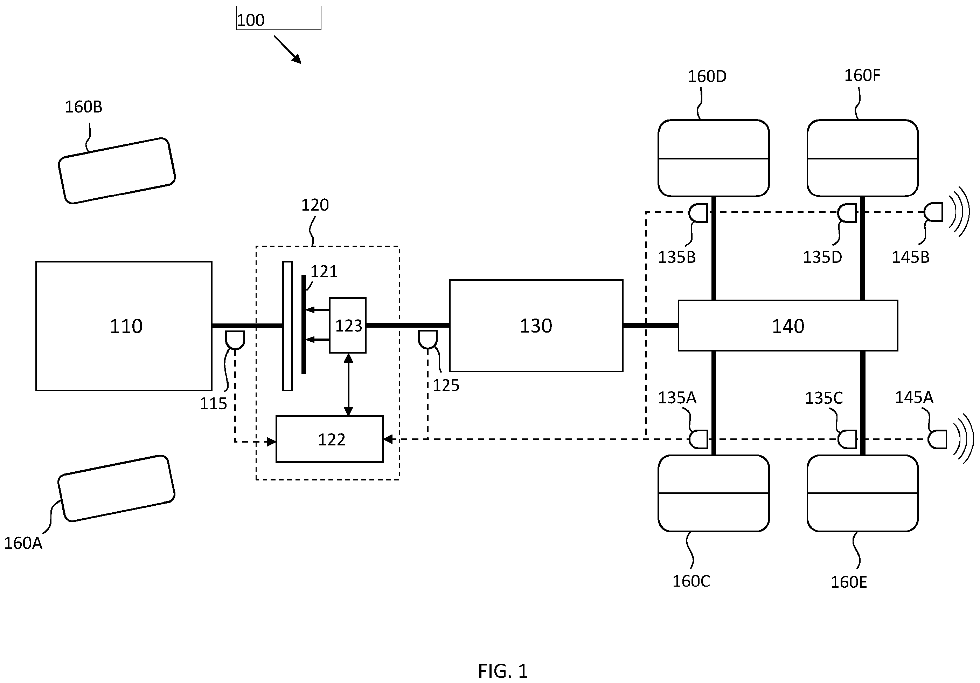

Fig. 1 illustrates a first aspect of the disclosure relating to a clutch control system 120 for mitigating driveline stress of a vehicle 100. An engine 110 or any other propulsion system is configured to generate mechanical power. A friction clutch 121 is operatively connected to the engine and designed to selectively engage and disengage the engine from the driveline. A transmission 130 is operatively connected to the friction clutch 121 and configured to modify the torque and speed of the power output from the engine, including multiple gear ratios for varying vehicle speed and torque requirements. A differential 140 is operatively connected to the transmission and configured to distribute power from the transmission to the driven wheels 160C, 160D, 160E, 160F while allowing the driven wheels to rotate at different speeds when the vehicle is turning. A first rear axle is operatively connected to the differential and designed to transmit power to a first set of driven wheels 160C, 160D, and a second rear axle is operatively connected to the differential and designed to transmit power to a second set of driven wheels 160E, 160F. In this example, a front axle is operatively connected to a set of non-driven wheels 160A, 160B.

All parts of the driveline, including the engine 110, friction clutch 121, transmission 130, and differential 140 are susceptible to mechanical failure during abrupt stops. As mentioned, such events may include transitioning from a wheel slipping event to a quick non-slipping event, or scenarios like a vehicle driving against a loading bay. The high inertia and gear ratio in heavy-duty vehicles can cause significant shock loads through the driveline, leading to mechanical damage.

The clutch control system 120 for mitigating driveline stress comprises the friction clutch 121, a clutch actuator 123 and an electronic control unit (ECU) 122. The friction clutch 121 is capable of transitioning between a fully open *d*ₒ, a partially open, and a fully closed position *d*_{c}. The control unit 122 is configured to receive vehicle data, wherein the vehicle data comprises current engine torque or any other parameter indicative of current engine torque. For example, the current engine torque may be obtained via engine speed sensor 115 and calculated by the control unit 122. It is well known to those skilled in the art how to derive engine torque from engine speed, and hence, the engine speed is a parameter indicative of the current engine torque.

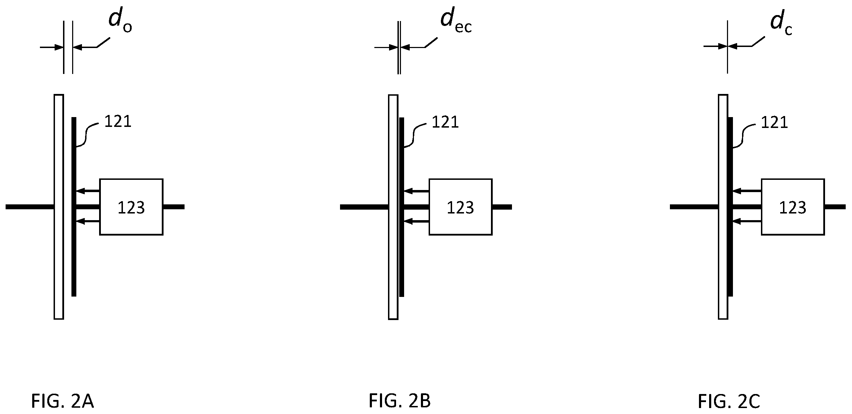

Fig. 2A-2C illustrate the friction clutch 121, controlled by the clutch actuator 123, in a fully open position *d*ₒ, an effectively closed position *d*_{ec}, and a fully closed position *d*_{c}. The control unit 122 is further configured to define one or more operational modes of the friction clutch, wherein the one or more operational modes comprise a driveline protection mode defined by having an operating range between the fully open position *d*ₒ and the effectively closed position *d*_{ec} of the clutch. The effectively closed position *d*_{ec} is a partially open position having a torque capacity that exceeds the current engine torque, thereby preventing clutch slip at the effectively closed position during normal operation. Any significant shock loads from abrupt wheel stops will then exceed the torque capacity, causing the clutch to slip. This slippage prevents the shock load from being absorbed by more fragile parts of the driveline, thereby avoiding potential mechanical damage.

Table 1 provides an example of clutch torque capacity for various clutch positions, i.e., the torque required to cause clutch slip at these positions. The clutch torque capacity may change with wear of the friction clutch. Therefore, control unit 122 may continuously update the relationship between clutch position and clutch torque capacity. This is achieved using the engine speed sensor 115 and clutch speed sensor 125. By comparing RPMs before and after the friction clutch 123, clutch slip can be easily detected, allowing for an updated assessment of clutch torque capacity.

**Table 1 - Clutch torque capacity for various clutch positions.**

| **Clutch position** | **Clutch torque capacity** |
|---|---|
| **2 mm (open)** | 0 Nm |
| **1 mm** | 0 Nm |
| **0 mm** | 0 Nm |
| **- 1 mm** | 500 Nm |
| **- 2 mm** | 1000 Nm |
| **- 3 mm** | 1500 Nm |
| **- 4 mm** | 2000 Nm |
| **- 5 mm** | 2500 Nm |
| **- 6 mm** | 3000 Nm |
| **- 7 mm** | 3500 Nm |
| **- 8 mm** | 3500 Nm |
| **- 9 mm (closed)** | 3500 Nm |

A clutch actuator 123 is configured to operate the clutch in accordance with the one or more operational modes, including the driveline protection mode. In some examples, the clutch actuator always operates the clutch in driveline protection mode. One advantage of always operating in driveline protection mode is that abrupt wheel stops are difficult to predict. By maintaining the friction clutch 121 in an effectively closed position rather than a fully closed position, the driveline is continuously protected against shock loads. The clutch actuator 123 may be connected to the control unit 122 through an interface. Typically, the control unit 122 comprises specialized algorithms for determining the operational mode in which the clutch actuator operates.

In some examples, the one or more operational modes further comprise a default mode defined by having an operating range between the fully open position *d*ₒ and the fully closed position *d*_{c} of the friction clutch 121. The clutch actuator 123 may be configured to switch between the default mode and the driveline protection mode based on various criteria. For example, the driveline protection mode may be activated in response to an increased likelihood of abrupt wheel stops and/or that the vehicle is operating under conditions that increase the risk of mechanical failure. An advantage of using a default mode having an operating range between the fully open position *d*ₒ and the fully closed position *d*_{c} is that wear on the friction clutch 121 may be reduced if it is not constantly operated in driveline protection mode, thereby increasing the lifespan of the friction clutch.

In some examples, the vehicle data further includes wheel slip data. A wheel slip event is characterized by one or more of the driven wheels 160C, 160D, 160E, 160F spinning out of control, which is detectable by the wheel slip sensors 135A, 135B, 135C, 135D. Wheel slip events are typically followed by an abrupt transition when the wheels regain traction, causing a shock load to pass through the driveline. Wheel slip data may be obtained from the wheel slip sensors 135A, 135B, 135C, 135D on the driven wheels 160C, 160D, 160E, 160F. The clutch actuator 123 may then be configured to operate the clutch in the default mode and immediately switch to the driveline protection mode upon detection of a wheel slip event, thereby ensuring that the driveline protection mode is active when the driven wheels 160C, 160D, 160E, 160F regain traction.

In some examples, the vehicle data further includes nearby obstacle data. A sudden stop, such as when a vehicle drives against a loading bay, can also cause a shock load to pass through the driveline. Obstacle sensors 145A, 145B on the vehicle can detect nearby obstacles that increase the likelihood of sudden stops. Nearby obstacle data is obtained from these obstacle sensors 145A, 145B. The obstacle sensors 145A, 145B may be parking sensors, radar sensors, LiDAR sensors, camera-based sensors, or any other type suitable for detecting nearby obstacles. The clutch actuator 123 may then be configured to operate the clutch in the default mode and switch to the driveline protection mode upon detecting a nearby obstacle, thereby ensuring that the driveline protection mode is active in case of a sudden stop of the driven wheels 160C, 160D, 160E, or 160F. In the example shown in Fig. 1, obstacle sensors 145A, 145B are mounted on the rear end of the vehicle 100. Additionally, similar sensors may also be installed on the vehicle's front.

In some examples, the vehicle data includes information about the current gear. Typically, lower gears are more susceptible to mechanical failure during abrupt stops. Moreover, certain transmission designs may exhibit known weaknesses in specific gears. For instance, a manufacturer might identify gear weaknesses in a transmission design by analyzing logged data from past mechanical failures across a fleet of vehicles using the same transmission type. Consequently, the clutch actuator 123 may be configured to operate the clutch in the default mode and switch to the driveline protection mode in response to a gear shift to a gear that has been designated for driveline protection mode usage. This ensures that the driveline protection mode is active when using gears that are more prone to mechanical failure.

As mentioned, the effectively closed position *d*_{ec} is a partially open position having a torque capacity that exceeds the current engine torque, thereby preventing clutch slip at the effectively closed position. In some examples, having a torque capacity that exceeds current engine torque may be achieved by having a torque capacity that exceeds a predefined torque limit. The predefined torque limit may further depend on a current gear of the vehicle. Table 2 provides an example of how the predefined torque limit may vary across different gears.

**Table 2 - Example of how a predefined torque limit may vary for different gears.**

| **Gear** | **Predefined torque limit** |
|---|---|
| **1** | 1000 Nm |
| **2** | 1500 Nm |
| **3** | 2000 Nm |
| **4** | 2500 Nm |
| **5** | UNLIMITED |

In some examples, the predefined torque limit may range from 0 to 20 percent above the current engine torque. The lower limit of 0 percent prevents clutch slippage, while the upper limit represents an acceptable risk of mechanical damage by controlling the shock load absorbed by the driveline. In some cases, an upper limit exceeding 20 percent may be considered acceptable if the vehicle is less susceptible to mechanical damage. Conversely, a 10 percent upper limit might be more appropriate in other cases to protect more fragile components of the driveline.

It should be noted that the clutch control system 120 may be implemented anywhere along the driveline. Typically, this involves integrating the clutch control system 120 with the friction clutch 121 located between the engine 110 and the transmission 130. However, it may also involve a friction clutch that is part of the transmission 130, the differential 140, or at any other location along the driveline.

Fig. 1 also illustrates a second aspect of the disclosure relating to a vehicle 100 comprising vehicle sensors configured to provide vehicle data and a clutch control system 120 according to any of the abovementioned examples. The vehicle sensors may comprise an engine speed sensor 115 or crankshaft sensor 115 configured to provide current engine torque or an engine speed indicative of engine torque to the control unit 122. The vehicle sensors further comprise a wheel slip sensors 135A, 135B, 135C, 135D configured to provide wheel slip data and/or a nearby obstacle sensors 145A, 145B or parking sensors 145A, 145B configured to provide nearby obstacle data. A vehicle equipped with the clutch control system 120, as described above, will be more effective at preventing shock loads from being absorbed by the fragile parts of the driveline, thereby making it less prone to mechanical damage.

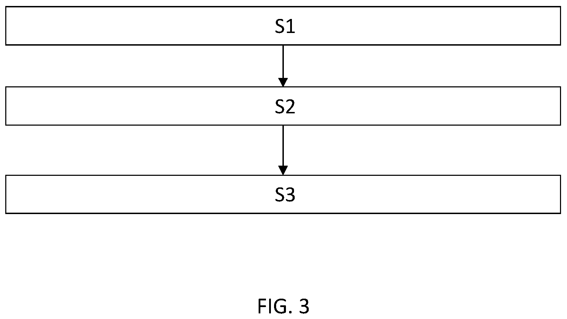

Fig. 3 illustrates a third aspect of the disclosure relating to a method for mitigating driveline stress in a vehicle comprising a friction clutch capable of transitioning between a fully open *d*ₒ, a partially open, and a fully closed position *d*_{c}. The method comprises receiving S1 vehicle data, defining S2 one or more operational modes, including a driveline protection mode, and operating S3 the friction clutch in accordance with the driveline protection mode. It should be noted that any of the aforementioned aspects relating to the clutch control system 120 and the vehicle 100 are also applicable to the method.

The step of receiving S1 vehicle data comprises receiving vehicle data from vehicle sensors or other control units of the vehicle 100. The vehicle data comprises current engine torque or any other parameter indicative of current engine torque. For example, the current engine torque may be obtained via engine speed sensor 115 and calculated by the control unit 122, as it is well known to those skilled in the art how to derive engine torque from engine speed. The vehicle data may also include wheel slip data, nearby obstacle data, and information on the current gear, as these additional parameters may be used to determine the most suitable operational mode for operating S3 the friction clutch 121, in case multiple operational modes have been defined.

The step of defining S2 one or more operational modes of the friction clutch comprises defining a driveline protection mode defined by having an operating range between a fully open position *d*ₒ and an effectively closed position *d*_{ec} of the friction clutch 121. The effectively closed position *d*_{ec} is a partially open position having a torque capacity that exceeds current engine torque, thereby preventing clutch slip at the effectively closed position during normal operation. Defining S2 one or more operational modes may also comprise defining a default mode having an operating range between the fully open position *d*ₒ and the fully closed position *d*_{c} of the friction clutch 121. An advantage of defining a default mode having an operating range between the fully open position *d*ₒ and the fully closed position *d*_{c} is that wear on the friction clutch 121 may be reduced if it is not constantly operated in driveline protection mode, thereby increasing the lifespan of the friction clutch.

The step of operating S3 comprises operating the friction clutch 121 in accordance with the one or more operational modes, including the driveline protection mode. An advantage of operating a vehicle in driveline protection mode is that any significant shock loads from abrupt wheel stops will exceed the torque capacity, causing the clutch to slip. This slippage prevents the shock load from being absorbed by more fragile parts of the driveline, thereby avoiding potential mechanical damage.

In some examples, vehicle data may comprise wheel slip data and operating S3 may further comprise operating the friction clutch in accordance with the default mode and switching to operating the friction clutch in accordance with the driveline protection mode upon detection of a wheel slip, thereby ensuring that the driveline protection mode is active when the driven wheels 160C, 160D, 160E, 160F regain traction after the wheel slip event.

In some examples, the vehicle data may comprise nearby obstacle data and operating S3 may further comprise operating the friction clutch in accordance with the default mode and switching to operating the friction clutch in accordance with the driveline protection mode upon detection of a nearby obstacle, thereby ensuring that the driveline protection mode is active in case of a sudden stop of the driven wheels 160C, 160D, 160E, or 160F.

In some examples, the vehicle data may comprise information on current gear, and operating S3 comprises operating the friction clutch in accordance with the default mode and switching to operating the friction clutch in accordance with the driveline protection mode in response to a gear shift to a gear that has been designated for driveline protection mode usage. Typically, lower gears are more susceptible to mechanical failure during abrupt stops. Moreover, certain transmission designs may exhibit known weaknesses in specific gears. For instance, a manufacturer might identify gear weaknesses in a transmission design by analyzing logged data from past mechanical failures across a fleet of vehicles using the same transmission type. This ensures that the driveline protection mode is active when using gears that are more prone to mechanical failure.

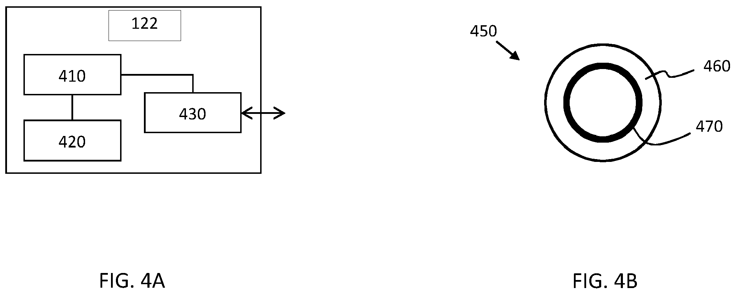

FIG. 4A schematically illustrates, in terms of a number of functional units, the components of a control unit 122 according to aspects of the discussions and methods disclosed herein. This control unit 122 may typically be comprised in the vehicle 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 122 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 122 to perform the set of operations. The set of operations may be provided as a set of executable instructions. Thus, the processing circuitry 410 is thereby arranged to execute methods as herein disclosed.

The storage medium 420 may also comprise persistent storage, which, for example, can be any single one or combination of magnetic memory, optical memory, solid state memory or even remotely mounted memory.

The control unit 122 may further comprise an interface 430 for communications with at least one external device, such as an engine, a friction clutch, a clutch actuator, vehicle sensors or a gearbox. As such the interface 430 may comprise one or more transmitters and receivers, comprising analogue and digital components and a suitable number of ports for wireline or wireless communication.

The processing circuitry 410 controls the general operation of the control unit 122, e.g., by sending data and control signals to the interface 430 and the storage medium 420, by receiving data and reports from the interface 430, and by retrieving data and instructions from the storage medium 420. Other components, as well as the related functionality, of the control node are omitted in order not to obscure the concepts presented herein.

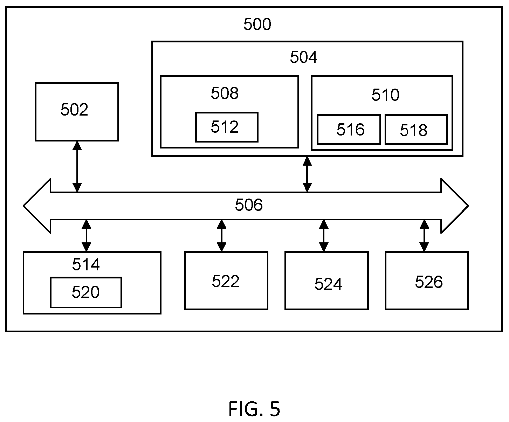

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the invention being set forth in the following claims.

## Claims

1. A clutch control system (120) for mitigating driveline stress in a vehicle, the clutch control system (120) comprising:
a friction clutch (121) capable of transitioning between a fully open *(dₒ),* a partially open, and a fully closed position (*d_{c}*);
a control unit (122) configured to receive vehicle data, wherein the vehicle data comprises current engine torque and/or a parameter indicative of current engine torque, and define one or more operational modes of the friction clutch, wherein the one or more operational modes comprise: a default mode defined by having an operating range between the fully open position *(dₒ)* and the fully closed position (*d_{c}*) of the clutch, and a driveline protection mode defined by having an operating range between the fully open position (*dₒ*) and an effectively closed position *(d_{ec})* of the clutch, wherein the effectively closed position *(d_{ec})* is a partially open position having a torque capacity that exceeds the current engine torque, thereby preventing clutch slip at the effectively closed position; and
a clutch actuator (123) configured to operate the clutch in accordance with the one or more operational modes, including the driveline protection mode;
the clutch control system (120) **characterized in that** the vehicle data comprises wheel slip data, and the clutch actuator is configured to operate the clutch in accordance with the default mode, and switch to the driveline protection mode upon detection of a wheel slip .

2. The clutch control system (120) of claim 1, wherein the vehicle data comprises nearby obstacle data, and the clutch actuator is configured to operate the clutch in accordance with the default mode, and switch to the driveline protection mode upon detection of a nearby obstacle.

3. The clutch control system of any of claims 1 to 2, wherein the vehicle data comprises information on current gear, and the clutch actuator is configured to operate the clutch in accordance with the default mode, and switch to the driveline protection mode in response to a gear shift to a gear that has been designated for driveline protection mode usage.

4. The clutch control system of any of claims 1 to 3, wherein having a torque capacity that exceeds current engine torque is achieved by having a torque capacity that exceeds a predefined torque limit.

5. The clutch control system of claim 4, wherein the predefined torque limit depends on a current gear of the vehicle.

6. The clutch control system of claim 4, wherein the predefined torque limit is 0 to 20 percent above the current engine torque.

7. A vehicle (100), comprising vehicle sensors (115, 125, 135) configured to provide vehicle data, wherein the vehicle sensors comprise a crankshaft sensor (115) configured to provide current engine torque, and a clutch control system (120) according to any of claims 1 to 2.

8. The vehicle (100) of claim 7, wherein the vehicle sensors further comprise a wheel slip sensor (135A, 135B, 135C, 135D) configured to provide wheel slip data and/or a parking sensor (145A, 145B) configured to provide nearby obstacle data, and the clutch control system (120) according to any of claims 1 to 7.

9. A method for mitigating driveline stress in a vehicle, the vehicle comprising a friction clutch capable of transitioning between a fully open *(dₒ),* a partially open, and a fully closed position (*d_{c}*), the method comprising.
receiving (S1) vehicle data, wherein the vehicle data comprises current engine torque and/or a parameter indicative of current engine torque;
defining (S2) one or more operational modes of the friction clutch, wherein the one or more operational modes comprise: a default mode having an operating range between the fully open position *(dₒ)* and the fully closed position (*d_{c}*) of the clutch, and a driveline protection mode defined by having an operating range between a fully open position *(dₒ)* and an effectively closed position *(d_{ec})* of the clutch, wherein the effectively closed position (*d_{ec}*) is a partially open position having a torque capacity that exceeds current engine torque, thereby preventing clutch slip at the effectively closed position; and
operating (S3) the friction clutch in accordance with the one or more operational modes, including the driveline protection mode,
the method **characterized in that** operating (S3) further comprises operating the friction clutch in accordance with the default mode and switching to operating the friction clutch in accordance with the driveline protection mode upon detection of a wheel slip.

10. The method of claim 9, wherein the vehicle data comprises nearby obstacle data, and operating (S3) comprises operating the friction clutch (121) in accordance with the default mode and switching to operating the friction clutch (121) in accordance with the driveline protection mode upon detection of a nearby obstacle.

11. The method of any of claims 9 to 10, wherein the vehicle data comprises information on current gear, and operating (S3) comprises operating the friction clutch in accordance with the default mode and switching to operating the friction clutch in accordance with the driveline protection mode in response to a gear shift to a gear that has been designated for driveline protection mode usage.

12. The method of any of claims 9 to 11, wherein having a torque capacity that exceeds current engine torque is achieved by having the torque capacity exceed a predefined torque limit.

13. The method of claim 12, wherein the predefined torque limit depends on a current gear of the vehicle.

14. The method of claim 12, wherein the predefined torque limit is 0 to 20 percent above the current engine torque.

15. A computer program (450) comprising program code means for performing the steps of any of claims 9-14 when said program is run on a computer or on processing circuitry (410) of a control unit (122).

16. A computer readable medium (460) carrying a computer program (470) comprising program code means for performing the steps of any of claims 9-14 when said program product is run on a computer or on processing circuitry (410) of a control unit (122).

## Patentansprüche

1. Kupplungssteuerungssystem (120) zur Verringerung von Antriebsstrangbelastung in einem Fahrzeug, wobei das Kupplungssteuerungssystem (120) umfasst:
eine Reibungskupplung (121), die zwischen einer vollständig geöffneten (*dₒ*), einer teilweise geöffneten und einer vollständig geschlossenen Position (*dc*) wechseln kann;
eine Steuereinheit (122), die dazu ausgelegt ist, Fahrzeugdaten zu empfangen, wobei die Fahrzeugdaten ein aktuelles Motordrehmoment und/oder einen Parameter, der das aktuelle Motordrehmoment anzeigt, umfassen, und einen oder mehrere Betriebsmodi der Reibungskupplung zu definieren, wobei der eine oder die mehreren Betriebsmodi umfassen: einen Standardmodus, der durch einen Betriebsbereich zwischen der vollständig geöffneten Position (*dₒ*) und der vollständig geschlossenen Position (*d_{c}*) der Kupplung definiert ist, und einen Antriebsstrangschutzmodus, der durch einen Betriebsbereich zwischen der vollständig geöffneten Position (*dₒ*) und einer effektiv geschlossenen Position (*d_{ec}*) der Kupplung definiert ist, wobei die effektiv geschlossene Position (*d_{ec}*) eine teilweise geöffnete Position ist, die eine Drehmomentkapazität aufweist, die das aktuelle Motordrehmoment übersteigt, wodurch ein Kupplungsschlupf in der effektiv geschlossenen Position verhindert wird; und
einen Kupplungsaktuator (123), der dazu ausgelegt ist, die Kupplung gemäß dem einen oder den mehreren Betriebsmodi, einschließlich des Antriebsstrangschutzmodus, zu betreiben;
wobei das Kupplungssteuerungssystem (120) **dadurch gekennzeichnet ist, dass** die Fahrzeugdaten Radschlupfdaten umfassen und der Kupplungsaktuator dazu ausgelegt ist, die Kupplung gemäß dem Standardmodus zu betreiben und bei Erkennung eines Radschlupfs in den Antriebsstrangschutzmodus zu wechseln.

2. Kupplungssteuerungssystem (120) nach Anspruch 1, wobei die Fahrzeugdaten Daten zu nahe gelegenen Hindernissen umfassen und der Kupplungsaktuator dazu ausgelegt ist, die Kupplung gemäß dem Standardmodus zu betreiben und bei Erkennung eines nahe gelegenen Hindernisses in den Antriebsstrangschutzmodus zu wechseln.

3. Kupplungssteuerungssystem nach einem der Ansprüche 1 bis 2, wobei die Fahrzeugdaten Informationen über den aktuellen Gang umfassen und der Kupplungsaktuator dazu ausgelegt ist, die Kupplung gemäß dem Standardmodus zu betreiben und als Reaktion auf einen Gangwechsel in einen Gang, der für die Verwendung im Antriebsstrangschutzmodus vorgesehen ist, in den Antriebsstrangschutzmodus zu wechseln.

4. Kupplungssteuerungssystem nach einem der Ansprüche 1 bis 3, wobei das Aufweisen einer Drehmomentkapazität, die das aktuelle Motordrehmoment übersteigt, dadurch erreicht wird, dass eine Drehmomentkapazität aufweist, die einen vordefinierten Drehmomentgrenzwert übersteigt.

5. Kupplungssteuerungssystem nach Anspruch 4, wobei der vordefinierte Drehmomentgrenzwert vom aktuellen Gang des Fahrzeugs abhängt.

6. Kupplungssteuerungssystem nach Anspruch 4, wobei der vordefinierte Drehmomentgrenzwert 0 bis 20 Prozent über dem aktuellen Motordrehmoment liegt.

7. Fahrzeug (100), umfassend Fahrzeugsensoren (115, 125, 135), die dazu ausgelegt sind, Fahrzeugdaten bereitzustellen, wobei die Fahrzeugsensoren einen Kurbelwellensensor (115) umfassen, der dazu ausgelegt ist, das aktuelle Motordrehmoment bereitzustellen, und ein Kupplungssteuerungssystem (120) nach einem der Ansprüche 1 bis 2.

8. Fahrzeug (100) nach Anspruch 7, wobei die Fahrzeugsensoren ferner einen Radschlupfsensor (135A, 135B, 135C, 135D), der dazu ausgelegt ist, Radschlupfdaten bereitzustellen, und/oder einen Parksensor (145A, 145B), der dazu ausgelegt ist, Daten zu nahe gelegenen Hindernissen bereitzustellen, umfassen, und das Kupplungssteuerungssystem (120) nach einem der Ansprüche 1 bis 7.

9. Verfahren zum Verringern von Antriebsstrangbelastungen in einem Fahrzeug, wobei das Fahrzeug eine Reibungskupplung umfasst, die zwischen einer vollständig geöffneten (*dₒ*), einer teilweise geöffneten und einer vollständig geschlossenen Position (*dc*) wechseln kann, wobei das Verfahren umfasst:
Empfangen (S1) von Fahrzeugdaten, wobei die Fahrzeugdaten ein aktuelles Motordrehmoment und/oder einen Parameter, der das aktuelle Motordrehmoment anzeigt, umfassen;
Definieren (S2) eines oder mehrerer Betriebsmodi der Reibungskupplung, wobei der eine oder die mehreren Betriebsmodi umfassen: einen Standardmodus, der einen Betriebsbereich zwischen der vollständig geöffneten Position (*dₒ*) und der vollständig geschlossenen Position (*d_{c}*) der Kupplung aufweist, und einen Antriebsstrangschutzmodus, der durch einen Betriebsbereich zwischen einer vollständig geöffneten Position (*dₒ*) und einer effektiv geschlossenen Position (*d_{ec}*) der Kupplung definiert ist, wobei die effektiv geschlossene Position (*d_{ec}*) eine teilweise geöffnete Position ist, die eine Drehmomentkapazität aufweist, die ein aktuelles Motordrehmoment übersteigt, wodurch ein Kupplungsschlupf in der effektiv geschlossenen Position verhindert wird; und
Betreiben (S3) der Reibungskupplung gemäß dem einen oder den mehreren Betriebsmodi, einschließlich des Antriebsstrangschutzmodus,
wobei das Verfahren **dadurch gekennzeichnet ist, dass** das Betreiben (S3) ferner das Betreiben der Reibungskupplung gemäß dem Standardmodus und das Wechseln zum Betreiben der Reibungskupplung gemäß dem Antriebsstrangschutzmodus bei Erkennung eines Radschlupfs umfasst.

10. Verfahren nach Anspruch 9, wobei die Fahrzeugdaten Daten zu nahe gelegenen Hindernissen umfassen und das Betreiben (S3) das Betreiben der Reibungskupplung (121) gemäß dem Standardmodus und das Wechseln zum Betreiben der Reibungskupplung (121) gemäß dem Antriebsstrangschutzmodus bei Erkennung eines nahe gelegenen Hindernisses umfasst.

11. Verfahren nach einem der Ansprüche 9 bis 10, wobei die Fahrzeugdaten Informationen über den aktuellen Gang umfassen und das Betreiben (S3) das Betreiben der Reibungskupplung gemäß dem Standardmodus und das Wechseln zum Betreiben der Reibungskupplung gemäß dem Antriebsstrangschutzmodus als Reaktion auf einen Gangwechsel in einen Gang umfasst, der für die Verwendung im Antriebsstrangschutzmodus vorgesehen ist.

12. Verfahren nach einem der Ansprüche 9 bis 11, wobei das Aufweisen einer Drehmomentkapazität, die das aktuelle Motordrehmoment übersteigt, dadurch erreicht wird, dass die Drehmomentkapazität einen vordefinierten Drehmomentgrenzwert übersteigt.

13. Verfahren nach Anspruch 12, wobei der vordefinierte Drehmomentgrenzwert vom aktuellen Gang des Fahrzeugs abhängt.

14. Verfahren nach Anspruch 12, wobei der vordefinierte Drehmomentgrenzwert 0 bis 20 Prozent über dem aktuellen Motordrehmoment liegt.

15. Computerprogramm (450), umfassend Programmcodemittel zum Durchführen der Schritte nach einem der Ansprüche 9 bis 14, wenn das Programm auf einem Computer oder auf einer Verarbeitungsschaltung (410) einer Steuereinheit (122) ausgeführt wird.

16. Computerlesbares Medium (460), das ein Computerprogramm (470) enthält, umfassend Programmcodemittel zum Durchführen der Schritte nach einem der Ansprüche 9 bis 14, wenn das Programmprodukt auf einem Computer oder auf einer Verarbeitungsschaltung (410) einer Steuereinheit (122) ausgeführt wird.

## Revendications

1. Système de commande d'embrayage (120) pour atténuer une contrainte de chaîne cinématique dans un véhicule, le système de commande d'embrayage (120) comprenant :
un embrayage à friction (121) apte à passer d'une position complètement ouverte (*dₒ*) à une position partiellement ouverte, et à une position complètement fermée (*d_{c}*) ;
une unité de commande (122) configurée pour recevoir des données de véhicule, dans lequel les données de véhicule comprennent un couple moteur actuel et/ou un paramètre indiquant le couple moteur actuel, et pour définir au moins un mode opérationnel de l'embrayage à friction, dans lequel ledit au moins un mode opérationnel comprend : un mode par défaut défini par une plage de fonctionnement entre la position complètement ouverte (*dₒ*) et la position complètement fermée (d_{c}) de l'embrayage, et un mode de protection de chaîne cinématique défini par une plage de fonctionnement entre la position complètement ouverte (*dₒ*) et une position effectivement fermée (*d_{ec}*) de l'embrayage, dans lequel la position effectivement fermée (*d_{ec}*) est une position partiellement ouverte présentant une capacité de couple supérieure au couple moteur actuel, empêchant ainsi un patinage de l'embrayage au niveau de la position effectivement fermée ; et
un actionneur d'embrayage (123) configuré pour actionner l'embrayage conformément audit au moins un mode opérationnel, y compris le mode de protection de chaîne cinématique ;
le système de commande d'embrayage (120) étant **caractérisé en ce que** les données de véhicule comprennent des données de patinage de roue, et l'actionneur d'embrayage est configuré pour actionner l'embrayage conformément au mode par défaut, et pour passer au mode de protection de chaîne cinématique lors de la détection d'un patinage de roue.

2. Système de commande d'embrayage (120) selon la revendication 1, dans lequel les données de véhicule comprennent des données d'obstacle à proximité, et l'actionneur d'embrayage est configuré pour actionner l'embrayage conformément au mode par défaut, et pour passer au mode de protection de chaîne cinématique lors de la détection d'un obstacle à proximité.

3. Système de commande d'embrayage selon l'une quelconque des revendications 1 et 2, dans lequel les données de véhicule comprennent des informations concernant un rapport actuel, et l'actionneur d'embrayage est configuré pour actionner l'embrayage conformément au mode par défaut, et pour passer au mode de protection de chaîne cinématique en réponse à un changement de rapport vers un rapport qui a été désigné pour une utilisation du mode de protection de chaîne cinématique.

4. Système de commande d'embrayage selon l'une quelconque des revendications 1 à 3, dans lequel la capacité de couple supérieure au couple moteur actuel est obtenue lorsque la capacité de couple est supérieure à une limite de couple prédéfinie.

5. Système de commande d'embrayage selon la revendication 4, dans lequel la limite de couple prédéfinie dépend d'un rapport actuel du véhicule.

6. Système de commande d'embrayage selon la revendication 4, dans lequel la limite de couple prédéfinie est supérieure de 0 à 20 pour cent au couple moteur actuel.

7. Véhicule (100), comprenant des capteurs de véhicule (115, 125, 135) configurés pour fournir des données de véhicule, dans lequel les capteurs de véhicule comprennent un capteur de vilebrequin (115) configuré pour fournir le couple moteur actuel, et un système de commande d'embrayage (120) selon l'une quelconque des revendications 1 et 2.

8. Véhicule (100) selon la revendication 7, dans lequel les capteurs de véhicule comprennent en outre un capteur de patinage de roue (135A, 135B, 135C, 135D) configuré pour fournir des données de patinage de roue et/ou un capteur de stationnement (145A, 145B) configuré pour fournir des données d'obstacle à proximité, et le système de commande d'embrayage (120) selon l'une quelconque des revendications 1 à 7.

9. Procédé pour atténuer une contrainte de chaîne cinématique dans un véhicule, le véhicule comprenant un embrayage à friction apte à passer d'une position complètement ouverte (do) à une position partiellement ouverte, et à une position complètement fermée (dc), le procédé comprenant les étapes consistant à :
recevoir (S1) des données de véhicule, dans lequel les données de véhicule comprennent un couple moteur actuel et/ou un paramètre indiquant le couple moteur actuel ;
définir (S2) au moins un mode opérationnel de l'embrayage à friction, dans lequel ledit au moins un mode opérationnel comprend : un mode par défaut présentant une plage de fonctionnement entre la position complètement ouverte (*dₒ*) et la position complètement fermée (*d_{c}*) de l'embrayage, et un mode de protection de chaîne cinématique défini par une plage de fonctionnement entre une position complètement ouverte (*dₒ*) et une position effectivement fermée (*d_{ec}*) de l'embrayage, dans lequel la position effectivement fermée (*d_{ec}*) est une position partiellement ouverte présentant une capacité de couple supérieure au couple moteur actuel, empêchant ainsi un patinage de l'embrayage au niveau de la position effectivement fermée ; et
actionner (S3) l'embrayage à friction conformément audit au moins un mode opérationnel, y compris le mode de protection de chaîne cinématique,
le procédé étant **caractérisé en ce que** l'étape consistant à actionner (S3) comprend en outre l'étape consistant à actionner l'embrayage à friction conformément au mode par défaut et à passer à l'actionnement de l'embrayage à friction conformément au mode de protection de chaîne cinématique lors de la détection d'un patinage de roue.

10. Procédé selon la revendication 9, dans lequel les données de véhicule comprennent des données d'obstacle à proximité, et l'étape consistant à actionner (S3) comprend les étapes consistant à actionner l'embrayage à friction (121) conformément au mode par défaut et à passer à l'actionnement de l'embrayage à friction (121) conformément au mode de protection de chaîne cinématique lors de la détection d'un obstacle à proximité.

11. Procédé selon l'une quelconque des revendications 9 et 10, dans lequel les données de véhicule comprennent des informations concernant un rapport actuel, et l'étape consistant à actionner (S3) comprend les étapes consistant à actionner l'embrayage à friction conformément au mode par défaut et à passer à l'actionnement de l'embrayage à friction conformément au mode de protection de chaîne cinématique en réponse à un changement de rapport vers un rapport qui a été désigné pour une utilisation du mode de protection de chaîne cinématique.

12. Procédé selon l'une quelconque des revendications 9 à 11, dans lequel la capacité de couple supérieure au couple moteur actuel est obtenue lorsque la capacité de couple est supérieure à une limite de couple prédéfinie.

13. Procédé selon la revendication 12, dans lequel la limite de couple prédéfinie dépend d'un rapport actuel du véhicule.

14. Procédé selon la revendication 12, dans lequel la limite de couple prédéfinie est supérieure de 0 à 20 pour cent au couple moteur actuel.

15. Programme informatique (450) comprenant des moyens de code de programme pour exécuter les étapes selon l'une quelconque des revendications 9 à 14 lorsque ledit programme est exécuté sur un ordinateur ou sur un circuit de traitement (410) d'une unité de commande (122).

16. Support lisible par ordinateur (460) portant un programme informatique (470) comprenant des moyens de code de programme pour exécuter les étapes selon l'une quelconque des revendications 9 à 14 lorsque ledit produit de programme est exécuté sur un ordinateur ou sur un circuit de traitement (410) d'une unité de commande (122).
